# EUROPÄISCHE PATENTANMELDUNG

(11) **EP 0 829 399 A2**
(43) Veröffentlichungstag der Anmeldung: **18.03.1998**
(21) Anmeldenummer: 97110086.2
(22) Anmeldetag: 20.06.1997
(51) Int. Cl.: B60S 1/04, B60S 1/34

(54) **Antriebsvorrichtung, insbesondere für Scheibenwischer an Kraftfahrzeugen**

(30) Priorität: 11.09.1996 DE 19636871
(71) Anmelder: ROBERT BOSCH GMBH, 70442 Stuttgart (DE)
(72) Erfinder: Kuehbauch, Gerd, 77830 Buehlertal (DE)

(57) **Zusammenfassung**

Die Erfindung betrifft eine Antriebsvorrichtung, insbesondere für Scheibenwischer an Kraftfahrzeugen, mit einem ortsfest angeordneten Halteelement (12), das wenigstens einseitig ein Lager (16) zur Aufnahme einer Wischerwelle aufweist, wobei das Lager (16) von einem mit dem Halteelement (12) kraftschlüssig verbundenen Formteil gebildet wird. Es ist vorgesehen, daß das Formteil (30) wenigstens eine Lagerschale (32,34) umfaßt, die einen Aufnahmebereich (58) zur Aufnahme einer Lagerbuchse (60) ausbildet und die die Lagerbuchse (60) zumindest teilweise formschlüssig umgreift, die Lagerschale (32,34) aus einem formbaren Material hoher Festigkeit und die Lagerbuchse (60) vorzugsweise aus Kunststoff besteht.

## Beschreibung

Die Erfindung betrifft eine Antriebsvorrichtung, insbesondere für Scheibenwischer an Kraftfahrzeugen, mit den im Oberbegriff des Anspruchs 1 genannten Merkmalen.

### Stand der Technik

Antriebsvorrichtungen der gattungsgemäßen Art sind bekannt. Diese weisen ein in der Regel als Hohlstange ausgebildetes Halteelement auf, das an seinen freien Enden Lager zur Aufnahme einer Wischerwelle aufweist. Die Lager werden üblicherweise als Druckgußteile, beispielsweise aus Zink oder Aluminium oder als Kunststoff-Spritzgußteile hergestellt. Bei den bekannten Lagern ist nachteilig, daß diese entweder eine ungenügende Bruchfestigkeit beziehungsweise ein hohes Gewicht aufweisen (Druckgußlager) oder diese schwierig an dem Halteelement zu befestigen sind (Kunststoffspritzgußteil-Lager). Aus der DE 29 20 899 C2 ist eine Scheibenwischeranlage bekannt, bei der das Lager von einem mit dem Halteelement kraftschlüssig verbundenen Formteil gebildet wird.

### Vorteile der Erfindung

Die erfindungsgemäße Antriebsvorrichtung mit den im Anspruch 1 genannten Merkmalen bietet demgegenüber den Vorteil, daß die Lager robust und einfach aufgebaut und kostengünstig herstellbar sind. Dadurch, daß das Lager von einem mit dem Halteelement kraftschlüssig verbundenen Formteil gebildet wird, das wenigstens eine Lagerschale aufweist, die einen Aufnahmebereich zur Aufnahme einer Lagerbuchse ausbildet und die die Lagerbuchse zumindest teilweise formschlüssig umgreift, wobei die Lagerschale aus einem formbaren Material mit hoher Festigkeit und die Lagerbuchse aus Kunststoff besteht, ist in einfacher Weise eine Optimierung der jeweiligen Lagerbestandteile für ihren Einsatzzweck möglich. Insbesondere ist vorteilhaft, daß sich die den jeweiligen Materialien innewohnenden Eigenschaften für die Ausbildung und Funktion des Lagers ergänzen. Dadurch, daß das die Haltefunktion des Lagers übernehmende Formteil aus einem Material mit hoher Festigkeit besteht, ist eine an dem Lager angreifende Kraft ohne weiteres problemlos ableitbar. Die eigentliche Lagerfunktion wird von der aus Kunststoff bestehenden Lagerbuchse übernommen, so daß eine im wesentlichen verschleißfreie und genaue Führung der Wischerwelle möglich ist.

Das insbesondere aus Blech bestehende Formteil, das vorzugsweise aus zwei Lagerschalen besteht, die die Lagerbuchse formschlüssig umgreifen, läßt sich mittels bekannter Herstellungstechniken in einfacher Weise mit hinreichend großer Fertigungsgenauigkeit herstellen. Die Lagerbuchse läßt sich als Kunststoff-Spritzteil in großer Anzahl in einfacher Weise mit an sich bekannten Herstellungstechniken erzeugen. Die Lagerbuchse läßt sich mit sehr hoher Genauigkeit herstellen, so daß die Wischerwelle im wesentlichen spielfrei von der Lagerbuchse aufgenommen werden kann.

Durch die Werkstoffkombination des Lagers, das heißt die Ausbildung des Formteils aus einem Blech und die Ausbildung der Lagerbuchse aus Kunststoff, läßt sich insgesamt eine Gewichtsreduktion des Lagers bei Beibehaltung hoher Festigkeitswerte erzielen.

Weitere vorteilhafte Ausgestaltungen der Erfindung ergeben sich aus den übrigen in den Unteransprüchen genannten Merkmalen.

Die Erfindung wird nachfolgend in Ausführungsbeispielen anhand der zugehörigen Zeichnungen näher erläutert. Es zeigen:
- Figur 1: eine schematische Gesamtansicht einer Antriebsvorrichtung für Scheibenwischer;
- Figur 2: eine perspektivische Ansicht eines erfindungsgemäßen Lagers;
- Figur 3: eine schematische Schnittdarstellung durch das Lager gemäß Figur 2 und
- Figuren 4 bis 5: schematische Detailansichten des Lagers in jeweils abgeänderten Ausführungsvarianten.

### Beschreibung der Ausführungsbeispiele

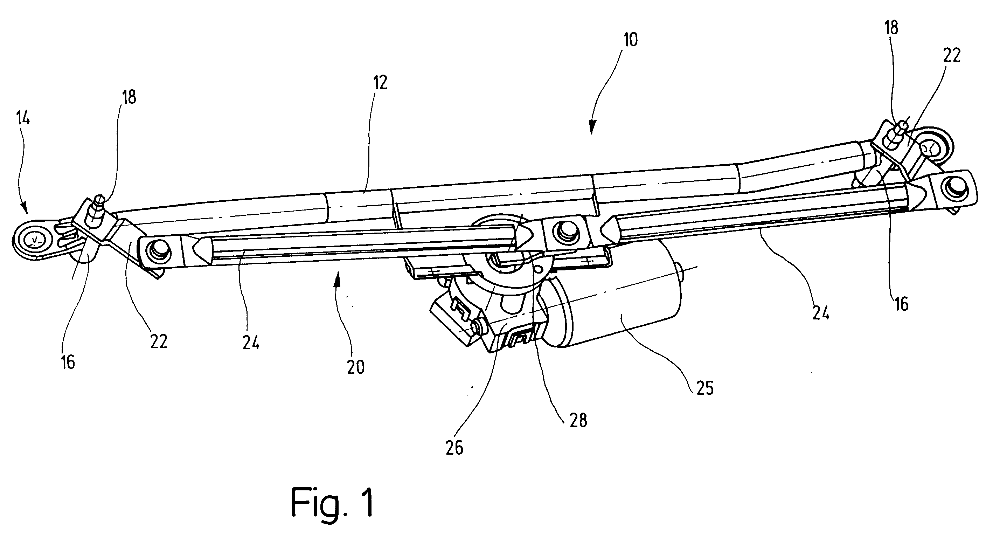

Figur 1 zeigt eine Gesamtansicht einer Antriebsvorrichtung für Scheibenwischer an Kraftfahrzeugen. Die Antriebsvorrichtung 10 besitzt ein Halteelement 12, das ortsfest in einem Kraftfahrzeug angordnet ist. Hierzu ist das Halteelement 12 an seinen freien Enden jeweils mit einem Befestigungselement 14 versehen, das eine Aufnahme für ein Befestigungsmittel aufweist. Mittels des nicht dargestellten Befestigungsmittels erfolgt eine Befestigung an einem Karosserieteil des Kraftfahrzeuges. Das Halteelement 12 weist ferner an seinen beiden Enden jeweils ein Lager 16 auf, durch das eine Wischerwelle 18 geführt ist. Die Wischerwelle 18 ist drehbeweglich, jedoch axial festgelegt angeordnet. Die Wischerwelle 18 ragt beidseitig über das Lager 16 hinaus, wobei an dem einen Ende der Wischerwelle 18 ein Kupplungsgestänge 20 angreift. Das Kupplungsgestänge 20 umfaßt jeweils einer Wischerwelle 18 zugeordnet eine erste Kupplungsstange 22 und eine zweite Kupplungsstange 24, die drehbeweglich miteinander verbunden sind. Die Kupplungsstange 22 ist drehfest mit der Wischerwelle 18 verbunden.

Ferner weist die Antriebsvorrichtung 10 einen Antriebsmotor 24 auf, der über ein Getriebe 26 eine Kurbel 28 antreibt. Die Kurbel 28 ist mit den Kupplungsstangen 24 verbunden.

Das zweite -in Figur 1 nicht sichtbare- Ende der Wischerwelle 18 trägt einen ein Wischerblatt aufweisenden Wischerarm.

Die Funktion der Antriebsvorrichtung 10 ist allgemein bekannt, so daß sich deren detaillierte Erläuterung erübrigt. Über den Antriebsmotor 25 wird die Kurbel 28 in Rotation versetzt. Hierdurch erfahren die Kupplungsstangen 24 eine im wesentlichen entlang ihrer Längsachse axiale Bewegung. Diese wird über die Kupplungsstange 22 in einer Schwenkbewegung umgewandelt und auf die Wischerwelle 18 übertragen. Hierdurch erfährt der an der Wischerwelle 18 angeordnete Wischerarm die bekannte Schwenkbewegung.

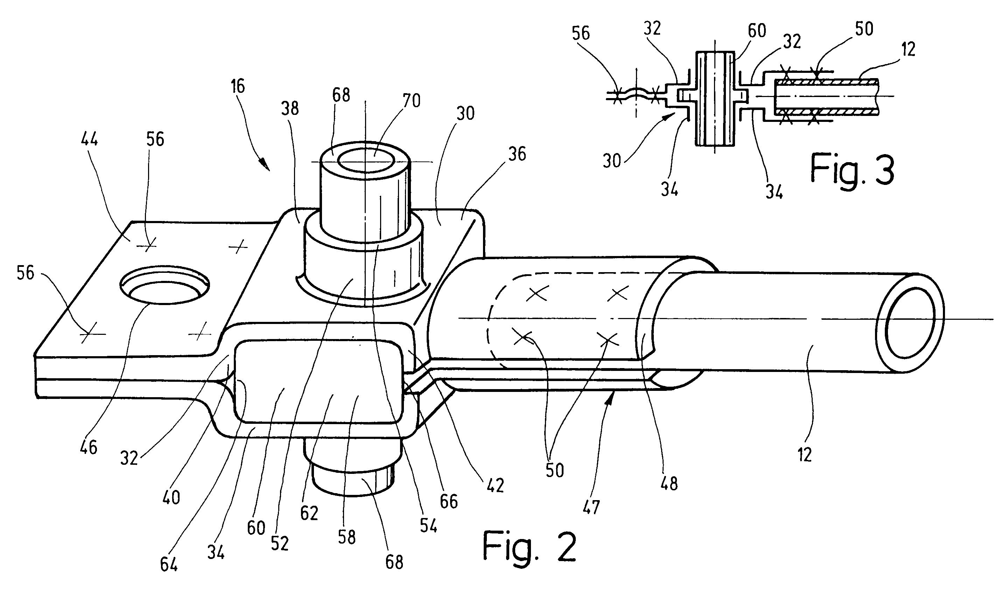

Nachfolgend soll anhand von Figur 2 der erfindungsgemäße Aufbau des Lagers 16 verdeutlicht werden. Das Lager 16 besteht aus einem Formteil 30, das hier von zwei Lagerschalen 32 und 34 gebildet wird. Der Aufbau der Lagerschalen 32 und 34 ist gleich, so daß der weitere Aufbau lediglich anhand der oberen Lagerschale 32 erläutert werden soll.

Die Lagerschale 32 besitzt ein Mittelteil 36, das von einer Grundplatte 38 gebildet wird, die an zwei gegenüberliegenden Seiten in Schenkel 40 und 42 übergeht. Die Schenkel 40 und 42 verlaufen im wesentlichen im rechten Winkel zur Grundplatte 38. Der Schenkel 40 geht in einen Befestigungsflansch 44 über, der das Befestigungselement 14 (Figur 1) der Antriebsvorrichtung 10 ausbildet. Der Befestigungsflansch 44 besitzt hierzu eine Durchgangsöffnung 46, durch die ein Befestigungsmittel, beispielsweise eine Gewindeschraube, führbar ist.

Der Schenkel 42 geht in eine Halbschale 48 über, deren Geometrie der des Halteelementes 12 angepaßt ist. Das Halteelement 12 besteht in der Regel aus einem Rohr, wobei die Innenkontur der Halbschale 48 der Außenkontur des Halteelementes 12 entspricht. Das Rohr kann einen runden, ovalen oder vieleckigen Querschnitt aufweisen. Die Halbschale 48 erstreckt sich ungefähr über den halben Umfang des Halteelementes 12. Eine kraftschlüssige Verbindung zwischen der Halbschale 48 und dem Halteelement 12 erfolgt beispielsweise durch eine Punktschweißverbindung 50.

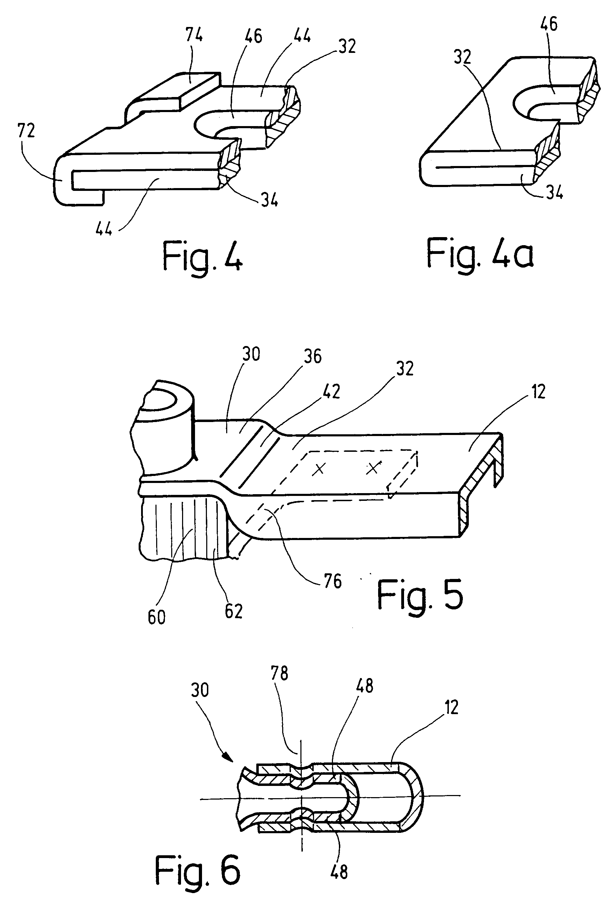

Nach einer weiteren, in Figur 6 dargestellten Ausführungsvariante, kann die Halbschale 48 auch so ausgebildet sein, daß diese in das rohrförmige Halteelement 12 eingeschoben wird. Hierbei ist die Außenkontur der Halbschale 48 der Innenkontur des Halteelementes 12 entsprechend angepaßt.

Die Grundplatte 38 des Mittelteiles 36 weist einen rohrförmigen Flansch 52 mit einer Durchgangsöffnung 54 auf. Im gezeigten Beispiel ist die Durchgangsöffnung 54 kreisrund. Nach weiteren -nicht dargestellten Ausführungsbeispielen- können die Durchgangsöffnungen 54 auch eine quadratische, rechteckige oder eine andere geeignete geometrische Form aufweisen.

Die zwei Lagerschalen 32 und 34 liegen spiegelbildlich mit ihren Befestigungsflanschen 44 aufeinander auf. An den Befestigungsflanschen 44 können die Lagerschalen 32 und 34 mittels einer Punktschweißverbindung 56 kraftschlüssig miteinander verbunden sein.

Durch die aufeinanderliegenden Lagerschalen 32 und 34 wird im Bereich der Grundplatten 38 ein auch als Lagerkäfig bezeichneter Aufnahmebereich 58 ausgebildet, dessen Größe sich einerseits durch die Grundfläche der Grundplatten 38 und die Höhe der Schenkel 40 beziehungsweise 42 ergibt. Der Aufnahmebereich 58 dient zur Aufnahme einer Lagerbuchse 60. Diese weist einen Grundkörper 62 auf, der quaderförmig ausgebildet ist und der den Aufnahmebereich 58 im wesentlichen ausfüllt. Mit gegenüberliegenden Seitenflächen 64 beziehungsweise 66 liegt der Grundkörper 62 an den Schenkeln 40 beziehungsweise 42 an, so daß die Lagerbuchse 60 von dem Formteil 30 formschlüssig und verdrehfest aufgenommen wird. Von dem Grundkörper 62 erstrecken sich an gegenüberliegenden Seiten Fortsätze 68, die die Durchgangsöffnungen 54 der Flansche 52 durchgreifen. Die Außenkontur der Fortsätze 68 ist der Kontur der Durchgangsöffnungen 54 angepaßt. Im gezeigten Beispiel entspricht ein Außendurchmesser der Fortsätze 68 einem Innendurchmesser der Durchgangsöffnungen 54, so daß diese im wesentlichen ohne Spiel durch die Flansche 52 geführt sind. Die Fortsätze 68 sind einstückig mit dem Grundkörper 62 ausgebildet. Durch die Fortsätze 68 und den Grundkörper 62 führt eine Durchgangsöffnung 70, die der Aufnahme der Wischerwelle 18 (Figur 1) dient.

Das aus den Lagerschalen 32 und 34 bestehende Formteil 30 besteht aus einem Blech, das durch entsprechende -einfach zu beherrschende- Tiefzieh-, Biege- beziehungsweise Stanzvorgänge in die entsprechende Form gebracht wird. Durch die Ausbildung aus Blech ist einerseits eine hohe mechanische Stabilität gegeben, die darüber hinaus auch die Punktschweißverbindungen 50 und 56 in einfacher Weise gestattet.

Die Lagerbuchse 60 besteht aus einem Kunststoffteil, das als Spritzgußteil in einfacher Weise in Massenfertigung herstellbar ist. Durch die Ausbildung der Lagerbuchse 60 als Kunststoffteil ist eine hohe Genauigkeit der die Wischerwelle 18 aufnehmenden Durchgangsöffnung 70 möglich, so daß eine im wesentlichen spielfreie und verschleißarme Führung der Wischerwelle 18 gegeben ist.

Durch den hier beschriebenen Aufbau des Lagers 16, das einerseits aus dem Formteil 30 und andererseits aus der Lagerbuchse 60 besteht, können sich die unterschiedlichen Materialeigenschaften sowohl des Formteiles 30 als auch der Lagerbuchse 60 ideal ergänzen. Das Formteil 30 übernimmt die mechanische Tragfunktion, während die Lagerbuchse 60 aufgrund der Gleiteigenschaften des Kunststoffs die Lagerfunktion übernimmt.

In Figur 3 ist schematisch nochmals der Aufbau des Lagers 16 gezeigt, wobei deutlich wird, daß das Lager 16 aus den zwei Komponenten, einerseits dem Formteil 30 mit seinen Lagerschalen 32 und 34, und andererseits der Lagerbuchse 60 besteht.

In den Figuren 4 bis 6 sind Details des erfindungsgemäßen Lagers 16 in verschiedenen vorteilhaften Ausführungsvarianten gezeigt. Figur 4 zeigt eine mögliche Verbindung der Lagerschalen 32 und 34 im Bereich der Befestigungsflansche 44. So ist jeweils ein zungenförmiger Endabschnitt 72 des Befestigungsflansches 44 der Lagerschale 32 und ein zungenförmiger Endabschnitt 74 des Befestigungsflansches 44 der Lagerschale 34 um den jeweils anderen Befestigungsflansch 44 herumgeführt, beispielsweise mittels eines Biegevorganges, so daß eine kraft- und formschlüssige Verbindung der Lagerschalen 32 und 34 besteht. Durch die in Figur 4 gezeigte Verbindung kann auf ein Verschweißen der Lagerschalen 32 und 34 an ihren Befestigungsflanschen 44 verzichtet werden.

Nach einem weiteren, in Figur 4a dargestellten Ausführungsbeispiel, können die Lagerschalen 32 und 34, und somit das gesamte Formteil 30, einstückig ausgebildet sein. Hierzu sind die Befestigungsflansche 44 an ihren den Mittelteilen 36 (Figur 2) abgewandten Enden einstückig miteinander verbunden. Dies kann durch einen einfachen Biegevorgang aus einem entsprechenden Blechstreifen erfolgen.

Figur 5 zeigt eine Ausführungsvariante, bei der wenigstens eine der Lagerschalen 32 und/oder 34 einstückig mit dem Halteelement 12 ausgebildet ist. Im in Figur 5 gezeigten Ausführungsbeispiel besteht das Halteelement 12 aus einem u-förmigen Halbprofil. Zur Festlegung der Lagerbuchse 60 erstreckt sich von dem Halteelement 12 eine -hier gestrichelt dargestellte- Haltelasche 76, die kraftschlüssig mit dem Halteelement 12 verbunden ist und an der sich die Lagerbuchse 60 mit ihrem Grundkörper 62 abstützt. Durch diese in Figur 5 gezeigte, gegenüber der in Figur 2 gezeigten Ausführungsvariante abgewandelten Bauform, läßt sich das Formteil 30 beispielsweise mit lediglich einer Lagerschale 32 realisieren, so daß ohne Festigkeitseinbußen eine Gewichtsreduzierung möglich ist.

Figur 6 zeigt eine Ausführungsvariante, bei der die Halbschalen 48 innerhalb eines Hohlprofils des Halteelementes 12 angeordnet sind. Eine kraftschlüssige Verbindung zwischen dem Halteelement 12 und den Halbschalen 48 kann beispielsweise durch Verkleben oder durch ein sogenanntes Verkrimpen erfolgen, bei dem eine bereichsweise, beispielsweie punktuelle, plastische Verformung des Halteelementes 12 erfolgt, so daß im Bereich dieser Verformung 78 Material der Halbschalen 48 verdrängt wird und der verdrängte Bereich des Materials der Halbschalen 48 von dem plastisch verformten Material des Halteelementes 12 ausgefüllt wird. Hierdurch läßt sich ohne einen Schweißvorgang eine kraftschlüssige Verbindung zwischen dem Halteelement 12 und dem Formteil 30 erzielen.

## Patentansprüche

1. Antriebsvorrichtung, insbesondere für Scheibenwischer an Kraftfahrzeugen, mit einem ortsfest angeordneten Halteelement, das wenigstens einseitig ein Lager zur Aufnahme einer Wischerwelle aufweist, wobei das Lager von einem mit dem Halteelement kraftschlüssig verbundenen Formteil gebildet wird, **dadurch gekennzeichnet**, daß das Formteil (30) wenigstens eine Lagerschale (32, 34) aufweist, die einen Aufnahmebereich (58) zur Aufnahme einer Lagerbuchse (60) umfaßt und die die Lagerbuchse (60) zumindest teilweise formschlüssig umgreift, und daß die Lagerschale (32, 34) aus einem Blechteil und die Lagerbuchse (60) vorzugsweise aus Kunststoff besteht.

2. Antriebsvorrichtung nach Anspruch 1, **dadurch gekennzeichnet**, daß das Formteil (30) zur Ausbildung eines Lagerkäfigs zwei Lagerschalen (32, 34) aufweist.

3. Antriebsvorrichtung nach einem der vorhergehenden Ansprüche, **dadurch gekennzeichnet**, daß die Lagerschalen (32, 34) jeweils einen Führungsflansch (52) für die Lagerbuchse (60) aufweisen.

4. Antriebsvorrichtung nach einem der vorhergehenden Ansprüche, **dadurch gekennzeichnet**, daß die Führungsflansche (52) einstückig mit den Lagerschalen (32, 34) verbunden sind.

5. Antriebsvorrichtung nach einem der vorhergehenden Ansprüche, **dadurch gekennzeichnet**, daß die Lagerschalen (32, 33) jeweils einen Befestigungsflansch (44) zum Befestigen der Antriebseinrichtung (10) an einem Karosserieteil des Kraftfahrzeuges ausbilden.

6. Antriebsvorrichtung nach einem der vorhergehenden Ansprüche, **dadurch gekennzeichnet**, daß die Lagerschalen (32, 34) jeweils ein Verbindungsteil (47) zur Verbindung mit dem Halteelement (12) ausbilden.

7. Antriebsvorrichtung nach einem der vorhergehenden Ansprüche, **dadurch gekennzeichnet**, daß die Verbindungsteile (47) von Halbschalen (48) gebildet werden, die das Halteelement (12) umgreifen und mit diesem kraftschlüssig verbunden sind.

8. Antriebsvorrichtung nach einem der vorhergehenden Ansprüche, **dadurch gekennzeichnet**, daß wenigstens eine der Lagerschalen (32, 34) einstückig mit dem Halteelement (12) ausgebildet ist.

9. Antriebsvorrichtung nach einem der vorhergehenden Ansprüche, **dadurch gekennzeichnet**, daß die Lagerschalen (32, 34) im Bereich ihrer Montageflansche (44) kraftschlüssig miteinander verbunden sind.
